# EUROPEAN PATENT SPECIFICATION

(11) **EP 4 309 939 B1**
(45) Date of publication and mention of the grant of the patent: **25.12.2024**
(21) Application number: 23182080.4
(22) Date of filing: 28.06.2023
(51) Int. Cl.: B60K 15/04, B60K 15/03

(54) **TRUCK COMPRISING A FUEL TANK SEALER CAP**
LASTKRAFTWAGEN MIT EINER TANKVERSCHLUSSKAPPE
CAMION AVEC UN CAPUCHON DE FERMETURE DU RÉSERVOIR DE CARBURANT

(30) Priority: 29.06.2022 NL 2032322
(43) Date of publication of application: 24.01.2024
(73) Proprietor: DAF Trucks N.V., 5643 TW Eindhoven (NL)
(72) Inventor: CUIJPERS, Johannes Martinus Catharina Marie, 5643 TW Eindhoven (NL); STEENBAKKERS, Johannes Henricus, 5643 TW Eindhoven (NL)
(74) Representative: V.O.

(56) References cited:
- FR-A2- 2 432 130
- GB-A- 2 525 196
- US-A1- 2016 101 685
- US-A9- 2018 194 222
- US-B1- 10 780 778
- US-B2- 10 207 761

## Description

The invention relates to trucks having a first fuel tank and a second fuel tank arranged in fluid communication with the first fuel tank, wherein the second fuel tank has a second orifice formed identically to a first orifice of the first fuel tank, and wherein an injection mouldable sealer cap is mountable to the second fuel tank for sealing the second orifice.

To uniformly distribute the payload caused by the amount of fuel carried on board, trucks may comprise a fuel supply system equipped with fuel tanks that are suspended on opposing sides of the centreline of the chassis. The fuel tanks can be arranged to form a system of fuel tanks, e.g. by a system of communicating vessels as described in US10780778, so that the amount of fuel is evenly reduced on each side of the chassis. Simultaneously, the system can be more robust and maintenance friendly, by reducing the number of electronic components. For example, in such a fuel tank system it may suffice to provide only one of the fuel tanks with a common fuel level sensor, by having a common inlet port for receiving fuel, a common outlet port for dispensing fuel, while the fuel tanks are fluidly connected, e.g. by a common hose or duct, for allowing passage of fuel between tanks. Consequently, such a fuel tank system comprises different individual fuel tank configurations, e.g. a main fuel tank and an auxiliary fuel tank.

For manufacturability, however, each fuel tank may have an identical, hence generic design comprising orifices for mounting electronic components and for providing inlet or outlet ports. Depending on the configuration of an individual fuel tank, some orifices may be functional while others may be obsolete.

In particular, in a system of communicating vessels where a common fuel level sensor is employed in a main fuel tank, the orifice for mounting a second fuel level sensor in the auxiliary tank has consequently become obsolete. The obsolete orifice can e.g. be sealed, to prevent fuel leakage and/or ingress of contaminants into the fuel tank system. It is a challenge, however, to robustly prevent fuel thieves from removing the seal to steal fuel from the truck's fuel supply system.

### SUMMARY

In summary, the invention pertains to a truck, comprising a first fuel tank, a second fuel tank, and an injection mouldable sealer cap. The first fuel tank has a first orifice for housing a fuel level sensor for measuring a fuel level in a fuel supply system of the truck. The second fuel tank is arranged in fluid communication with the first fuel tank, and has a second orifice formed identically to the first orifice. The sealer cap is mountable to the second fuel tank for sealing the second orifice.

The injection mouldable sealer cap comprises a cover plate and a tubular insert. The cover plate is arranged for covering the second orifice. The tubular insert coaxially extends from the cover plate and is arranged for extending into the second orifice. The tubular insert comprises an outer wall provided with a locking arrangement that is engageable with an inner wall structure of the second fuel tank to clamp the cover plate, by applying a sealing force between the second fuel tank and the injection mouldable sealer cap.

The locking arrangement is lockable by a rotation of the injection mouldable sealer cap in a sealing direction. The cover plate comprises a top surface provided with a plurality of circular groove segments. The groove segments are dimensioned and positioned to minimize shrinkage or deformation of the sealer cap during the injection moulding process. Each groove segment of the plurality of groove segments provides a contact surface, substantially normal to the sealing direction, and the contact surface is accessible by a mounting tool for rotating the injection mouldable sealer cap in the sealing direction to apply the sealing force.

Each groove segment of the plurality of groove segments provides a bottom surface that extends against the sealing direction from the contact surface towards the top surface, wherein the bottom surface comprises an inclining wall section that inclines from a lower level inside the groove segment towards the top surface, for dislocating the mounting tool from the injection mouldable sealer cap when rotated against the sealing direction.

Accordingly, unauthorized individuals are only able to further secure the sealer cap to the second fuel tank, by driving the contact surfaces in the sealing direction, while the bottom surface prevents rotating the sealer cap against the sealing direction, to access the content of the fuel tank. The circular groove segments are dimensioned and positioned to define the geometry of the cover plate, to minimize shrinkage or deformation of the sealer cap during the injection moulding process.

To make the injection mouldable sealer cap compatible with dedicated mounting tools only, the contact surfaces can be at an offset to a midplane that intersects a centreline of the sealer cap.

The cover plate may comprise a bottom surface provided with a ring groove that encircles the tubular insert. In this way, an additional biasing or sealing element, such as an O-ring, can be applied between the injection mouldable sealer cap and the second fuel tank, to improve the sealing of the second orifice.

To further prevent unauthorized disassembly of the injection mouldable sealer cap, the cover plate may comprise an outer edge that is chamfered, so that conventional tools, such as wrenches or pliers, cannot easily engage with the cover plate. For similar reasons, the cover plate may comprise a circular contour.

The cover plate can comprise a protrusion that extends outward from the top surface, and the protrusion can provide an indicator for indicating a relative angle between the injection mouldable sealer cap and the second fuel tank along the sealing direction. By having the indicator extend from the top surface, the sealer cap is only compatible with specific mounting tools, e.g. a dedicated mounting tool that provides a clearance for the indicator when engaged with the sealer cap. As such, the risk of unauthorized disassembly of the injection mouldable sealer cap is further reduced. By indicating the relative angle between the sealer cap and the second fuel tank along the sealing direction, the protrusion can also provide a visual inspection means to verify whether the sealer cap is mounted properly, e.g. with a prescribed sealing force, so that the second fuel tank is securely sealed and the risk of fuel theft is minimized.

To determine the sealing force level, the locking arrangement may comprise a plurality of bayonet locking elements arranged around the circumference of the tubular insert. Each bayonet locking element of the plurality of bayonet locking elements can e.g. extend radially outward from the outer wall and may comprise a front section which in the sealing direction tapers from a lower level to a higher level, and a central section which is recessed with respect to the higher level. Accordingly, the taper of the front section and the height of the recessed central section can be adjusted to determine the sealing force and/or the releasing force.

### BRIEF DESCRIPTION OF THE DRAWINGS

The invention will be further elucidated in the figures:
FIG 1 illustrates an embodiment of a truck comprising a sealer cap;
FIG 2 illustrates an isometric view of an embodiment of a sealer cap;
FIG 3 provides a top view of another or further embodiment of the sealer cap;
FIG 4 provides a section view of the sealer cap depicted in FIG 3;
FIG 5 illustrates a side view of an embodiment of a sealer cap, comprising bayonet locking elements;
FIG 6A and 6B provide an isometric top and bottom view, respectively, of an example of a sealer cap as described herein.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

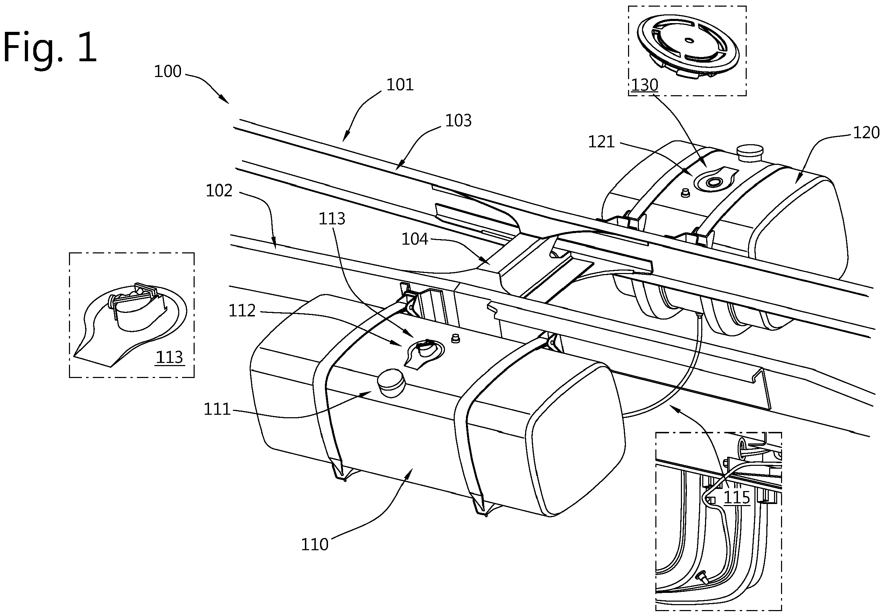

FIG 1 represents a truck 100, illustrated by a chassis 101 comprising a pair of longitudinal chassis beams 102, 103, arranged along a driving direction of the truck 100, and a cross member 104 extending in a lateral direction between the longitudinal chassis beams 102, 103. A first fuel tank 110 and a second fuel tank 120 are suspended to the chassis 101, as part of a fuel supply system of the truck 100. For example, as illustrated in FIG 1, the first fuel tank 110 can be suspended on one side of the chassis 101, along longitudinal chassis beam 102, e.g. as a main fuel tank. The second fuel tank 120 can be suspended on the other, opposing side of the chassis 101, along longitudinal chassis beam 103, e.g. as an auxiliary fuel tank. Alternatively, or additionally, the space between the longitudinal chassis beams 102, 103 can be used for suspending one or more fuel tanks.

The first and second fuel tanks 110, 120 are fluidly connected, e.g. by one or more intermediate hoses or ducts, such that fuel is able to flow between the first and second fuel tanks 110, 120, e.g. as in a system of communicating vessels. For example, when fuelling the truck 100, fuel may be supplied to both tanks 110, 120 through an inlet 111 e.g. provided on the first fuel tank 110. Also, fuel is available from both tanks 110, 120, when dispensing fuel through an outlet e.g. provided on the first fuel tank 110, to the engine of the truck 100.

As shown in FIG 1, the first fuel tank 110 comprises a first orifice 112 for housing a fuel level sensor 113. Accordingly, by having the first and second fuel tanks 110, 120 arranged as communicating vessels, the fuel level sensor 113 can be used as a common fuel level sensor for measuring a common fuel level in the fuel supply system of the truck 100.

The second fuel tank 120 is arranged in fluid communication with the first fuel tank 110, e.g. via one or more intermediate hoses 115. To facilitate manufacturability of the fuel supply system, the first and second fuel tanks 110, 120 have an at least partially generic, or similar design, causing each fuel tank to have identical ports for accessing the fuel tanks and identical interfaces for connecting components thereto. Accordingly, the second fuel tank 120 comprises a second orifice 121 which is formed identically to the first orifice 112 of the first fuel tank 110.

Since the fuel supply system is provided with a single, common fuel level sensor 112, mounted to the first orifice 112 of the first fuel tank 110, the second orifice 121 of the second fuel tank 120 is obsolete. Accordingly, a sealer cap 130 is mounted to the second fuel tank 120 for sealing the second orifice 121. The sealer cap 130 is injection mouldable. Alternatively, the sealer cap 130 may be manufacturable by die casting or additive manufacturing.

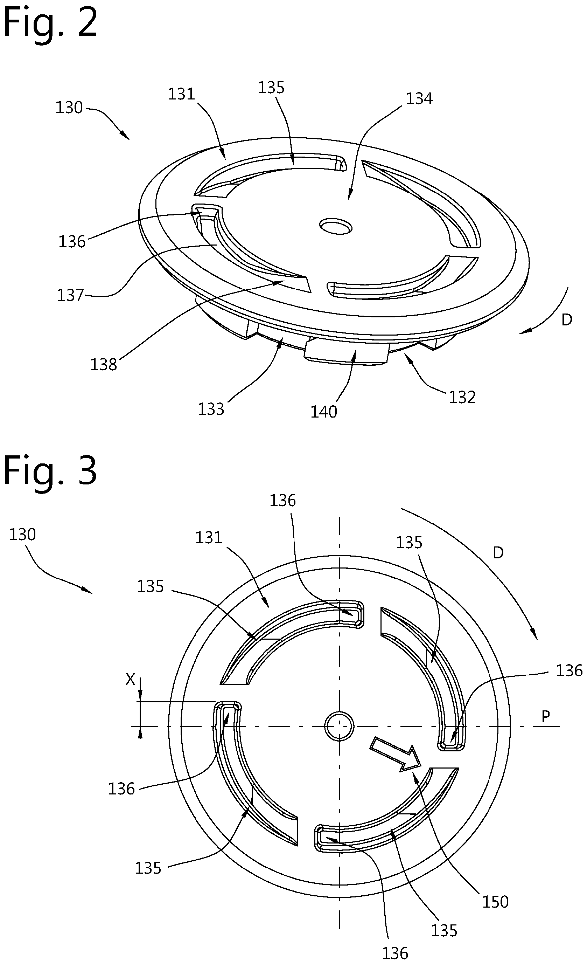

As illustrated in FIG 2, the injection mouldable sealer cap 130 comprises a cover plate 131 arranged for covering the second orifice, and a tubular insert 132 that coaxially extends from the cover plate 131 and is arranged for extending into the second orifice. The tubular insert 132 comprises an outer wall 133 provided with a locking arrangement 140 that is engageable with an inner wall structure of the second fuel tank. For example, the locking arrangement 140 can comprise a threaded connection, a keyed connection, a bayonet connection, a snap-lock connection, a press-fit connection, or a magnetic connection.

By rotating the sealer cap in a sealing direction D, e.g. a clockwise direction, the locking arrangement 140 applies a sealing force between the second fuel tank and the sealer cap 130, which sealing force seals or clamps the cover plate 131 to the exterior surface of the second fuel tank. Accordingly, the cover plate 131 circumferentially seals the second orifice with a specific, e.g. predefined, sealing force.

The cover plate 131 comprises a top surface 134 that is provided with circular groove segments 135, e.g. two or more circular groove segments 135. FIG 2 illustrates an embodiment in which the top surface 134 is provided with four circular groove segments 135. Preferably, the circular groove segments 135 are coaxially aligned with the centreline of the sealer cap 130. Each groove segment 135 provides a contact surface 136 which is substantially normal to the sealing direction D. The contact surfaces 136 can e.g. be accessible by a dedicated mounting tool for rotating the sealer cap 130 in the sealing direction D to apply the sealing force.

Each groove segment 135 further provides a bottom surface 137 that extends against the sealing direction D, from the contact surface 136 towards the top surface 134 of the cover plate 131. The bottom surface 137 comprises an inclining wall section 138 that inclines from a lower level inside the groove segment 135 towards the top surface 134. Accordingly, when a mounting tool is engaged with the groove segments 135 and rotated against the sealing direction D, e.g. to try to disassemble the sealer cap 130 from the second fuel tank 120, the inclining wall sections 138 of the bottom surfaces 137 dislocate the mounting tool from the sealer cap 130.

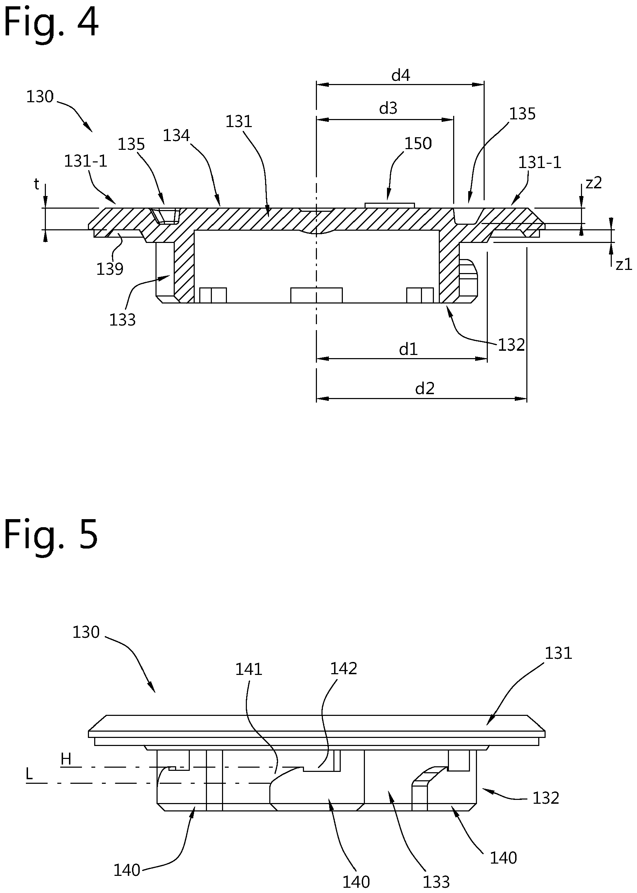

FIGs 3 and 4 illustrate a top view and section view of another or further embodiment of the sealer cap 130, wherein the cover plate 131 has a circular contour. Additionally, or alternatively, the outer edge of the cover plate may be chamfered, rounded, or bevelled, sloping downwards from the top surface 134 towards the contour. Accordingly, it is difficult for conventional tools, such as pliers or wrenches, to engage with the edge or contour of the cover plate 131 and apply a torque in or against the sealing direction D, to assemble or disassemble the sealer cap 130. Instead, the design of sealer cap 130 is compatible only with specific, e.g. dedicated, mounting tools which can interact with the groove segments 135 in the cover plate 131.

As illustrated, the contact surfaces 136 can be arranged at an offset X to a midplane P that intersects the centreline of the sealer cap 130. Thus, any mounting tool dedicated for the depicted embodiment is to be provided with correspondingly arranged protrusions for engaging with the contact surfaces 136 at an offset X to the midplane P.

FIGs 3 and 4 show that the cover plate 131 may additionally comprise an indicator 150 that extends outward from the top surface 134, and that is arranged for indicating a relative angle between the sealer cap 130 and the second fuel tank along the sealing direction D. In this way, proper sealing of the second orifice of the second fuel tank is verifiable by visual inspection. Simultaneously, the outward extension of the indicator 150 further prevents engagement of conventional tools with the sealer cap 130, because of the mounting tool clearance volume that is required around the indicator 150.

The cross-sectional view depicted in FIG 4 illustrates that the cover plate 131 may comprise a bottom surface provided with a ring groove 139 that encircles the tubular insert 132. The ring groove 139 can e.g. be used for accommodating a biasing or sealing member, such as an O-ring, gasket, or washer.

As illustrated in FIG 4, the cover plate 131 can comprise a flange section 131-1 that radially extends beyond the outer wall 133 of the tubular insert 132. By dimensioning of and relative positioning between the groove segments 135 and the ring groove 139, the flange section 131-1 can be provided with inherent flexibility, e.g. in axial and/or radial direction of the sealer cap 130, thereby improving the geometrical stability of the flange section 131-1 when the sealer cap 130 is manufactured in an injection moulding process. By defining the wall thickness t of the flange section 131-1, the effects of material shrinkage on the geometrical properties of the sealer cap 130, specifically the flange section 131-1, can be minimized.

For example, the dimensions of the ring groove 139 can be considered as given, having an inner diameter d1 and outer diameter d2 and extending a depth z1 into the cover plate 131, e.g. for accommodating a specific sealing member around the circumference of the second orifice of the second fuel tank. Subsequently, the groove segments 135 can be dimensioned to have an inner diameter d3, an outer diameter d4, and an extension depth z2 into the cover plate 131, to define the wall thickness t along the flange section 131-1. Alternatively, or additionally, the dimensions of the ring groove 139 can be adapted to the dimensions of the groove segments 135.

FIG 5 provides a side view of another or further embodiment of the sealer cap, comprising bayonet locking elements 140 arranged around the circumference of the tubular insert 132. Each bayonet locking element 140 extends radially outward from the outer wall 133 of the tubular insert 132 and comprises a front section 141 which in the sealing direction D tapers from a lower level L to a higher level H, and a central section 142 which is recessed with respect to the higher level H.

The central section 142 is e.g. recessed between 0.3 and 1.0 millimetre with respect to the higher level H. Accordingly, when the sealer cap 130 is rotated in the sealing direction, the sealing force is initially increased to a maximum sealing force level, by the inner wall structure of the second fuel tank engaging with the tapered front section 141, and then decreased to a predefined sealing force level as the inner wall structure is locked, or secured, on the recessed central section 142. The force difference between the maximum sealing force level and the predefined sealing force level can e.g. be accommodated by inherent elasticity of the sealer cap 130, such as of the cover plate 131, tubular insert 132 or locking arrangement 140. Alternatively, or additionally, an extendible section can be provided between the sealer cap 130 and the second fuel tank, e.g. by a biasing or sealing member, arranged for extending or shortening to compensate for the force difference.

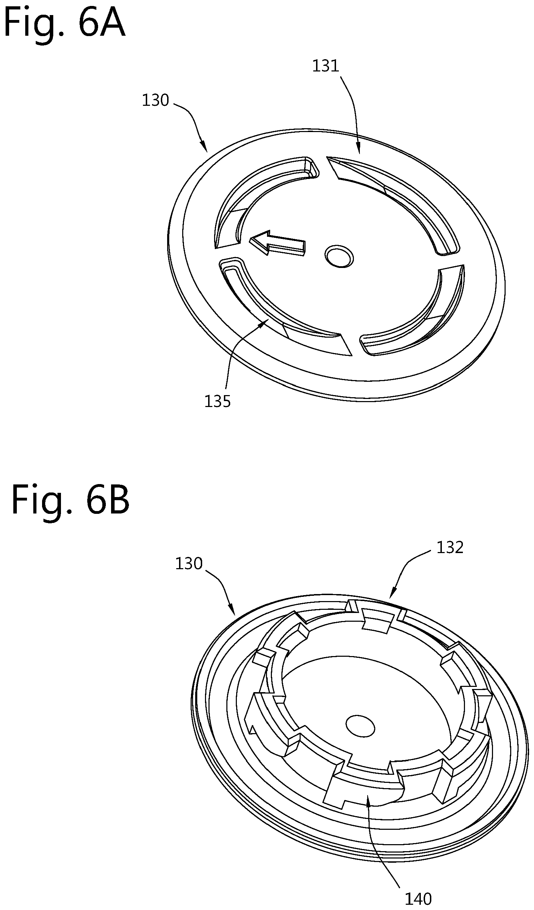

FIGs 6A and 6B illustrate top and bottom isometric views, respectively, of an example of a sealer cap 130 as described herein. The sealer cap 130 is an injection mouldable part, e.g. made of polyoxymethylene (POM), or any other type of formable polymer or metal.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention, defined by the appended claims, may include embodiments having combinations of all or some of the features described.

The invention applies not only to automotive applications where the sealer cap is used for automotive purposes, but also to other technical, industrial or agricultural applications where a sealer cap is used. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean `at least one', and do not exclude a plurality.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck (100), comprising:
- a first fuel tank (110), comprising a first orifice (112) for housing a fuel level sensor (113) for measuring a fuel level in a fuel supply system of the truck;
- a second fuel tank (120), arranged in fluid communication with the first fuel tank (110), and comprising a second orifice (121) formed identically to the first orifice (112); and
- an injection mouldable sealer cap (130), mountable to the second fuel tank (120) for sealing the second orifice (121), wherein the injection mouldable sealer cap (130) comprises:
∘ a cover plate (131), arranged for covering the second orifice (121); **characterized by**
∘ a tubular insert (132), coaxially extending from the cover plate (131) and arranged for extending into the second orifice (121), wherein the tubular insert (132) comprises an outer wall (133) provided with a locking arrangement (140) that is engageable with an inner wall structure of the second fuel tank (120) to clamp the cover plate (131), by applying a sealing force between the second fuel tank (120) and the injection mouldable sealer cap (130);
wherein the locking arrangement (140) is lockable by a rotation of the injection mouldable sealer cap (130) in a sealing direction (D); wherein the cover plate (131) comprises a top surface (134) provided with a plurality of circular groove segments (135); wherein each groove segment (135) of the plurality of groove segments provides a contact surface (136), substantially normal to the sealing direction (D), wherein the contact surface (136) is accessible by a mounting tool for rotating the injection mouldable sealer cap (130) in the sealing direction (D) to apply the sealing force; and
wherein each groove segment (135) of the plurality of groove segments provides a bottom surface (137) that extends against the sealing direction (D) from the contact surface (136) towards the top surface (134), wherein the bottom surface (137) comprises an inclining wall section (138) that inclines from a lower level inside the groove segment (135) towards the top surface (134), for dislocating the mounting tool from the injection mouldable sealer cap (130) when rotated against the sealing direction (D).

2. Truck (100) according to claim 1, wherein the contact surface (136) is at an offset (X) to a midplane (P) that intersects a centreline of the injection mouldable sealer cap (130).

3. Truck (100) according to any preceding claim, wherein the cover plate (131) comprises a bottom surface provided with a ring groove (139) that encircles the tubular insert (132).

4. Truck (100) according to any preceding claim, wherein the cover plate (131) comprises an outer edge that is chamfered.

5. Truck (100) according to any preceding claim, wherein the cover plate (131) comprises a circular contour.

6. Truck (100) according to any preceding claim, wherein the cover plate (131) comprises a protrusion that extends outward from the top surface (134), wherein the protrusion provides an indicator (150) for indicating a relative angle between the injection mouldable sealer cap (130) and the second fuel tank (120) along the sealing direction (D).

7. Truck (100) according to any preceding claim, wherein the locking arrangement (140) comprises a plurality of bayonet locking elements arranged around the circumference of the tubular insert (132), wherein each bayonet locking element of the plurality of bayonet locking elements extends radially outward from the outer wall (133) and comprises a front section (141) which in the sealing direction (D) tapers from a lower level (L) to a higher level (H), and a central section (142) which is recessed with respect to the higher level (H).

## Patentansprüche

1. Lastkraftwagen (100), umfassend:
- einen ersten Kraftstofftank (110), der eine erste Öffnung (112) zur Aufnahme eines Kraftstoffpegelsensors (113) zur Messung eines Kraftstoffpegels in einem Kraftstoffversorgungssystem des Lastkraftwagens umfasst;
- einen zweiten Kraftstofftank (120), der in Fluidverbindung mit dem ersten Kraftstofftank (110) angeordnet ist und eine zweite Öffnung (121) umfasst, die identisch zu der ersten Öffnung (112) ausgebildet ist; und
- eine spritzgießbare Verschlusskappe (130), die an dem zweiten Kraftstofftank (120) zum Verschließen der zweiten Öffnung (121) montierbar ist, wobei die spritzgießbare Verschlusskappe (130) umfasst:
o eine Abdeckplatte (131), die zum Abdecken der zweiten Öffnung (121) angeordnet ist; **gekennzeichnet durch**
o einen rohrförmigen Einsatz (132), der sich koaxial von der Abdeckplatte (131) erstreckt und so angeordnet ist, dass er sich in die zweite Öffnung (121) hinein erstreckt, wobei der rohrförmige Einsatz (132) eine Außenwand (133) umfasst, die mit einer Verriegelungsanordnung (140) versehen ist, die mit einer Innenwandstruktur des zweiten Kraftstofftanks (120) in Eingriff gebracht werden kann, um die Abdeckplatte (131) zu klemmen, indem eine Dichtungskraft zwischen dem zweiten Kraftstofftank (120) und der spritzgießbaren Verschlusskappe (130) aufgebracht wird;
wobei die Verriegelungsanordnung (140) durch eine Drehung der spritzbaren Verschlusskappe (130) in einer Dichtungsrichtung (D) verriegelbar ist; wobei die Abdeckplatte (131) eine obere Fläche (134) umfasst, die mit einer Vielzahl von kreisförmigen Nutsegmenten (135) versehen ist;
wobei jedes Nutsegment (135) der Vielzahl von Nutsegmenten eine Kontaktfläche (136) bildet, die im Wesentlichen senkrecht zur Dichtungsrichtung (D) verläuft, wobei die Kontaktfläche (136) durch ein Montagewerkzeug zum Drehen der spritzgießbaren Verschlusskappe (130) in der Dichtungsrichtung (D) zugänglich ist, um die Dichtungskraft aufzubringen; und
wobei jedes Nutsegment (135) der Vielzahl von Nutsegmenten eine Bodenfläche (137) aufweist, die sich entgegen der Dichtungsrichtung (D) von der Kontaktfläche (136) zur oberen Fläche (134) erstreckt, wobei die Bodenfläche (137) einen geneigten Wandabschnitt (138) umfasst, der sich von einem unteren Niveau innerhalb des Nutsegments (135) zur oberen Fläche (134) hin neigt, um das Montagewerkzeug von der spritzgießbaren Verschlusskappe (130) zu dislozieren, wenn es gegen die Dichtungsrichtung (D) gedreht wird.

2. Lastkraftwagen (100) nach Anspruch 1, wobei die Kontaktfläche (136) einen Versatz (X) zu einer Mittelebene (P) aufweist, die eine Mittellinie der spritzgießbaren Verschlusskappe (130) schneidet.

3. Lastkraftwagen (100) nach einem der vorhergehenden Ansprüche, wobei die Abdeckplatte (131) eine Bodenfläche umfasst, die mit einer Ringnut (139) versehen ist, die den rohrförmigen Einsatz (132) umgibt.

4. Lastkraftwagen (100) nach einem der vorhergehenden Ansprüche, wobei die Abdeckplatte (131) einen äußeren Rand umfasst, der abgeschrägt ist.

5. Fahrzeug (100) nach einem der vorhergehenden Ansprüche, wobei die Abdeckplatte (131) eine kreisförmige Kontur umfasst.

6. Lastkraftwagen (100) nach einem der vorhergehenden Ansprüche, wobei die Abdeckplatte (131) einen Vorsprung umfasst, der sich von der oberen Fläche (134) nach außen erstreckt, wobei der Vorsprung einen Indikator (150) für die Anzeige eines relativen Winkels zwischen der spritzgießbaren Verschlusskappe (130) und dem zweiten Kraftstofftank (120) entlang der Dichtungsrichtung (D) darstellt.

7. Lastkraftwagen (100) nach einem der vorhergehenden Ansprüche, wobei die Verriegelungsanordnung (140) eine Vielzahl von Bajonettverschlusselementen umfasst, die um den Umfang des rohrförmigen Einsatzes (132) herum angeordnet sind, wobei sich jedes Bajonettverschlusselement der Vielzahl von Bajonettverschlusselementen von der Außenwand (133) radial nach außen erstreckt und einen vorderen Abschnitt (141), der sich in Dichtungsrichtung (D) von einem unteren Niveau (L) zu einem höheren Niveau (H) verjüngt, und einen mittleren Abschnitt (142), der gegenüber dem höheren Niveau (H) zurückgesetzt ist, umfasst.

## Revendications

1. Camion (100), comprenant :
- un premier réservoir de carburant (110), comprenant un premier orifice (112) pour loger un capteur de niveau de carburant (113) pour mesurer un niveau de carburant dans un système d'alimentation en carburant du camion ;
- un second réservoir de carburant (120), agencé en communication fluidique avec le premier réservoir de carburant (110), et comprenant un second orifice (121) formé de manière identique au premier orifice (112) ; et
- un capuchon étanchéifiant (130) pouvant être moulé par injection, pouvant être monté sur le second réservoir de carburant (120) pour fermer de manière étanche le second orifice (121), dans lequel le capuchon étanchéifiant (130) pouvant être moulé par injection comprend :
o une plaque de recouvrement (131), agencée pour recouvrir le second orifice (121) ; **caractérisé par**
o un insert tubulaire (132), s'étendant coaxialement à partir de la plaque de recouvrement (131) et agencé pour s'étendre dans le second orifice (121), dans lequel l'insert tubulaire (132) comprend une paroi extérieure (133) pourvue d'un agencement de verrouillage (140) qui peut venir en prise avec une structure de paroi intérieure du second réservoir de carburant (120) pour serrer la plaque de recouvrement (131), en appliquant une force d'étanchéité entre le second réservoir de carburant (120) et le capuchon étanchéifiant (130) pouvant être moulé par injection ;
dans lequel l'agencement de verrouillage (140) peut être verrouillé par une rotation du capuchon étanchéifiant (130) pouvant être moulé par injection dans une direction d'étanchéité (D) ;
dans lequel la plaque de recouvrement (131) comprend une surface supérieure (134) pourvue d'une pluralité de segments de rainure circulaires (135) ;
dans lequel chaque segment de rainure (135) de la pluralité de segments de rainure fournit une surface de contact (136), sensiblement normale à la direction d'étanchéité (D), dans lequel la surface de contact (136) est accessible par un outil de montage pour faire tourner le capuchon étanchéifiant (130) pouvant être moulé par injection dans la direction d'étanchéité (D) pour appliquer la force d'étanchéité ; et
dans lequel chaque segment de rainure (135) de la pluralité de segments de rainure fournit une surface inférieure (137) qui s'étend à l'encontre de la direction d'étanchéité (D) à partir de la surface de contact (136) vers la surface supérieure (134), dans lequel la surface inférieure (137) comprend une section de paroi inclinée (138) qui s'incline à partir d'un niveau inférieur à l'intérieur du segment de rainure (135) vers la surface supérieure (134), pour déboîter l'outil de montage depuis le capuchon étanchéifiant (130) pouvant être moulé par injection lorsqu'il est tourné à l'encontre de la direction d'étanchéité (D).

2. Camion (100) selon la revendication 1, dans lequel la surface de contact (136) est à un décalage (X) par rapport à un plan médian (P) qui entrecoupe une ligne centrale du capuchon étanchéifiant (130) pouvant être moulé par injection.

3. Camion (100) selon l'une quelconque des revendications précédentes, dans lequel la plaque de recouvrement (131) comprend une surface inférieure pourvue d'une rainure annulaire (139) qui encercle l'insert tubulaire (132).

4. Camion (100) selon l'une quelconque des revendications précédentes, dans lequel la plaque de recouvrement (131) comprend un bord extérieur qui est chanfreiné.

5. Camion (100) selon l'une quelconque des revendications précédentes, dans lequel la plaque de recouvrement (131) comprend un contour circulaire.

6. Camion (100) selon l'une quelconque des revendications précédentes, dans lequel la plaque de recouvrement (131) comprend une saillie qui s'étend vers l'extérieur à partir de la surface supérieure (134), dans lequel la saillie fournit un indicateur (150) pour indiquer un angle relatif entre le capuchon étanchéifiant (130) pouvant être moulé par injection et le second réservoir de carburant (120) le long de la direction d'étanchéité (D).

7. Camion (100) selon l'une quelconque des revendications précédentes, dans lequel l'agencement de verrouillage (140) comprend une pluralité d'éléments de verrouillage à baïonnette agencés autour de la circonférence de l'insert tubulaire (132), dans lequel chaque élément de verrouillage à baïonnette de la pluralité d'éléments de verrouillage à baïonnette s'étend radialement vers l'extérieur à partir de la paroi extérieure (133) et comprend une section avant (141) qui, dans la direction d'étanchéité (D), se rétrécit d'un niveau inférieur (L) à un niveau supérieur (H), et une section centrale (142) qui est en retrait par rapport au niveau supérieur (H).
